# EUROPEAN PATENT SPECIFICATION

(11) **EP 3 727 789 B1**
(45) Date of publication and mention of the grant of the patent: **15.09.2021**
(21) Application number: 18815723.4
(22) Date of filing: 14.12.2018
(51) Int. Cl.: B29C 45/14, B29C 45/26, B60J 10/70, B29C 33/02, B29C 33/30

(54) **MOLD TO OVERMOLD A PLASTIC MATERIAL TO AT LEAST A PORTION OF THE PERIPHERY OF A GLAZING PANEL**
WERKZEUG ZUM UMSPRITZEN EINES KUNSTSTOFFMATERIALS FÜR MINDESTENS EINEN TEIL DES UMFANGS EINER GLASPLATTE
MOULE POUR SURMOULER UNE MATIÈRE PLASTIQUE SUR AU MOINS UNE PARTIE DE LA PÉRIPHÉRIE D'UN PANNEAU DE VITRAGE

(30) Priority: 22.12.2017 EP 17210108
(43) Date of publication of application: 28.10.2020
(73) Proprietor: AGC Glass Europe, 1348 Louvain-La-Neuve (BE)
(72) Inventor: DELNEUFCOURT, Sébastien, 1348 Louvain-La-Neuve (BE)
(74) Representative: AGC Glass Europe
(86) International application number: PCT/EP2018/084865
(87) International publication number: WO 2019/121354

(56) References cited:
- EP-A1- 0 173 907
- EP-A1- 1 346 820
- EP-A1- 2 537 659
- EP-A1- 2 799 201
- EP-A1- 3 210 741
- JP-A- H02 147 217
- US-A- 4 894 972
- US-A- 4 999 147
- US-A- 5 316 829
- US-A- 5 316 829

## Description

### Technical Domain of the Invention

The present invention relates to a mold to overmold a plastic material to at least a portion of the periphery of a glazing panel, as disclosed in US 5 316 829 or EP 1 346 820. More particularly, the present invention relates to a mold with an interchangeable molding part.

### Background of the Invention

With development of new vehicles, users have higher requirements in term of safety, comfort and aesthetics of vehicle. In order to improve the aesthetic of the vehicle and especially around glazings, different solutions are used on visible area of glazing panels, such as decorative trims, profiled joints, etc.

Glazing panels on a vehicle and in particular side windows are often made of a transparent rigid material with a profiled joint surrounding at least a portion of the periphery of the glazing panel. The profiled joint is used to add a sealing function between the glazing panel and the car body. The profiled joint is used to have an aesthetic link between the glazing panel and the car body. This glazing panel with such profiled joint is called encapsulated glazing panel.

The transparent rigid panel used in glazing panel is manufactured in flat sheets. The flat sheets are cut to size and optionally an enamel is applied, typically around the periphery of the glass. Enamel is important for decoration and exterior styling, principally to hide from view what may be positioned behind the enamel, such as, for example, attachment means for securing the glazing panel to a motor vehicle body, etc. Enamel is normally applied by a silk-screen process to the transparent rigid material. The enamel is applied to the transparent rigid material and then heated to cure the enamel and bond it to the transparent rigid material.

The transparent rigid material can be made of glass such as soda-lime glass, alumino-silicate glass,... or plastic such as polycarbonate.

Profiled joint has two main functions. First is a sealing function of the glazing panel with the car body and the second is to have an element between the car body and the substrate for finishing and aesthetic reasons.

For cost reason, the profiled joint is produced in a black color where plastic material is directly visible. The glazing panel can only be produced with some dull aspect or defects. To limit these problems, a difference of gloss can be required.

In case of a high gloss level is required, a decorative trim should be added on the module in order to ensure to get the right finishing.

The profiled joint may also incorporate inserts. These inserts are used to add rigidity to the profiled joint and/or to fix another element such as a decorative trim on it.

Encapsulated glazing panel may be fabricated as described below. First, a piece of glass is pre-processed such as by cutting, edging, cleaning and thermal treatment. Then, the glass is submitted to an encapsulation process in an encapsulation mold, including an upper mold and a lower mold. The piece of glass is placed as an insert on a chuck of the lower mold and is fixed with a positioning device of the lower mold. Then the upper mold and the lower mold are jointed together. Through sprue gates, molten plastics are injected towards edges of the glass. An encapsulated glazing panel is obtained after the molten plastics are solidified and encapsulated the edges of the glass. Plastics are usually made of a thermoplastic materials as TPE or PVC. it is understood if any other plastics suitable for this application may be used.

To minimize surface defects, some parameters are important such as numbers and place of injection heads in the mold, the pressure and the temperature of injection of encapsulation material, ...

However, with known existing method, the profiled joints produced are subject to scratch or to visible defect, such as shark effect, ununiformed coloration or bubbles, even if correct parameters of molding and encapsulation are well configured.

The invention provides a solution to overcome the above described defaults and further allows to avoid to add a trim to mask these defaults or to obtain the required aesthetic.

The following description relates to an automotive glazing panel but it is understood that the invention may be applicable to others fields like architectural glazing which may provide encapsulated plastic part.

### Summary of the Invention

The invention relates to an improved mold to encapsulate a plastic material to at least a portion of the periphery of a glazing panel comprising an upper mold which comprises a body and a molding surface; a lower mold which comprises a body and a molding surface; a cavity formed when the mold is closed between molding surfaces and the glazing panel.

The invention relates also to a method to encapsulate a plastic material as a profiled joint to at least a portion of the periphery of a glazing panel and to a glazing panel comprising on a portion of its periphery at least a profiled joint obtained by the said method.

According to the invention, the method to encapsulate a plastic material to at least a portion of the periphery of a glazing panel in a mold comprising an upper mold which comprises a body and a molding surface and a lower mold which comprises a body and a molding surface.

The method comprises at least the steps of:
(a) pre-heating at least the molding surface (22) of the upper mold (21);
(b) inserting the glazing between the upper mold (20) and the lower mold (30);
(c) closing the upper (20) and the lower (30) molds to create a cavity (50) surrounding the portion of the periphery of a glazing panel (2) where the plastic material has to be overmold;
(d) injecting a plastic material into the cavity (50);
(e) cooling at least the molding surface (22) of the upper mold (20);
(f) extracting the glazing with the overmolded profiled joint.

Pre-heating at least the molding surface of the first part of the mold prevents the plastic material to freeze directly when it is in contact with the surface and creates defects and allows to kiss/match precisely the whole molding surface even if the molding surface is textured meaning that is structured with different textures. Preferably, the molding surface is heated to a temperature between 40°C and 90°C] and more preferably between 75°C and 80°C] to obtain the good interface between the plastic and the molding surface.

Cooling at least the molding surface (22) of the upper mold (20) to a temperature of the surface of the encapsulation between 30°C and 50°C to be able to store or manipulate easily the encapsulated glazing panel.

Plastic material is injected through sprue gate and are preferably injected at a temperature around 200°C depending of the plastic material.

The glazing panel can be a transparent and rigid substrate as a glass panel, such as soda-lime glass panel or alumino-silicate glass panel, or a polycarbonate panel. The glazing panel can be pre-processed such as by cutting, edging and cleaning. The glazing panel can also receive another pre-processed such to obtain a toughened, annealed or tempered glazing panel.

The plastic material can be a thermoplastic material such as TPE or PVC.

According to another embodiment and to minimize the delta of temperature between the molding surface and the plastic material to avoid the degradation and/or defect on the surface of the profiled joint formed by the plastic material, the body of the upper mold comprises a heating device and a cooling device to heat and cool at least the molding surface of the upper mold.

Preferably, to have a similar temperature in the whole surface of the profiled joint, the body of the lower part comprises a cooling device.

In another embodiment of the invention, and to have a similar effect as in the surface of the upper mold, the body of the lower part comprises a heating device.

In a particular embodiment, a heating device comprises ducts and inductors extending along a longitudinal direction in the ducts.

The inductors are placed in ducts that extend near the molding surface of at least the upper mold. These ducts can be made by drilling the body of the mold or by grooving the underside of the body of the mold at the interface between that body of the upper mold and the interchangeable surface element.

In another embodiment, the cooling device comprises ducts in which fluid can pass through. Preferably, the fluid comprises water and preferably more than 80% of water, more preferably more than 90% of water. In another embodiment, the fluid comprises oil.

The cooling device is made with conduits drilled in the body, which are further away from the molding surface. That cooling device carries out both the cooling of the body, which, in a common embodiment, is made in material that is relatively insensitive to induction heating, and the cooling of the molding surface.

According to one embodiment, the glazing panel is pre-processed to obtain a laminated glazing panel means that the glazing panel comprises at least two glass sheets and an interlayer; the at least two glass sheets are maintained together by the interlayer. This embodiment allows to add sound reduction and/or security performances.

In another embodiment, the molding surface of the upper mold in contact with the plastic material is at least partially textured/structured and the profiled joint is textured with the texture corresponding to the texture of the mold.

The structure can be made by any technical methods. The structure consists of making precise geometrical structures on at least a part of the surface of the mold that will be in contact with the profiled joint. Relief created is generally deeper than 1 mm and preferably dipper than 5 mm and more preferably deeper than 10 mm. The depth is calculated locally between the highest point and the lowest point next to the highest point of the surface.

The structure creates micrometric relief on the plastic parts with the same depth than the depth of the least the part of the surface of the mold that will be in contact with the profiled joint.

According to the invention, a micropyramid-like structure can be created on at least a part of the surface of a profiled joint. The micropyramids created on the surface change the absorption coefficient and the light reflection on the profile joint. Other microstructures can be created to change the light absorption, the light reflection, to change aesthetical aspect such as creating crocodile skin effect, add logos,.. on at least a part of the profiled joint ,to change the technical surface aspect such as wettability improvement or friction coefficient modification or even change the gloss level.

Preferably, the texture could be done on the full surface or on a defined area (at least a part) of the surface of the profiled joint of a glazing.

According to the invention, different texturing could be used on the same surface by using a specific and unique surface mold or by butting mold parts together with a specific structured surface.

The texturation can be made by any technical methods. The texturation is a defined and controlled texturation means that the same texturation will be applied on the profiled joint to reduce or to control the gloss or to give a specific design such as nano-texturated design such as carbon-like effect to a macro-texturated design such as crocodile skin effect, logos,.. Each texturation can have a specific effect such as reducing the reflection of the light, reducing the gloss, giving a specific gloss to have some parts brighter than others like in case of carbon-like effects, giving 3D textures to avoid water to stay on the profiled joint, to add a wind protection,...

### Figure

The present invention will now be more particularly described with reference to drawings and exemplary embodiments, which are provided by way of illustration and not of limitation. The drawings are a schematic representation and not true to scale. The drawings do not restrict the invention in any way. More advantages will be explained with examples.

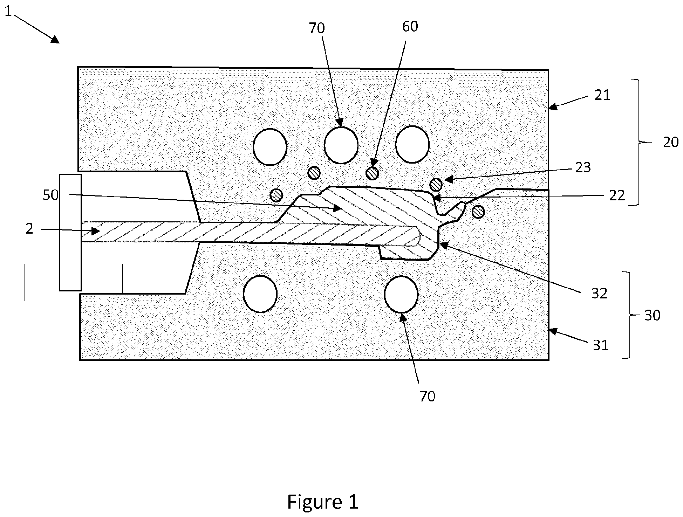

Figure 1 schematically illustrates a cross-sectional view of a part of a mold according to one embodiment of the present disclosure.

The figure 1 shows a mold (1) according to one embodiment of the invention to encapsulate a plastic material to at least a portion of the periphery of a glazing panel (2). The mold (1) comprises an upper mold (20) which comprises a body (21) and a molding surface (22), a lower mold (30) which comprises a body (31), a molding surface (32) and a cavity (50) formed when the mold is closed between molding surfaces (22, 32) and the glazing panel (2). The upper mold corresponds to the upper face of the glazing panel (2), commonly the outside surface of the glazing when the glazing panel is mounted in a vehicle and it is also the visible surface of the glazing panel.

In this embodiment, the molding surface (22) of the upper mold (20) comprises a interchangeable surface element (23) maintained by at least mechanical and/or electromechanical elements to the body (21) of the upper mold (20) such as screws, magnets,...

In this embodiment, the body (21) of the upper mold (20) comprises a heating device (60) and a cooling device (70). The lower mold comprises also a cooling device. Depending of the profile of the profiled joint, the lower mold can comprises a heating device.

In this embodiment, the heating device (60) comprises ducts drilled into the body (21) of the upper mold (20) and inductors extending along a longitudinal direction in the ducts. Inductors are made of conductive materials and are linked to a heat generator.

In this embodiment, the cooling device comprises ducts in which the fluid is passing through. The temperature of the fluid is given by the temperature wanted at the surface of the profiled joint. In this embodiment, the fluid is water.

In another embodiment, the mold is similar to the first embodiment but interchangeable surface element (24) is at least partially textured to give a predetermined textured to the profiled joint formed on the glazing panel.

## Claims

1. Method to encapsulate a plastic material to at least a portion of the periphery of a glazing panel (2) in a mold (1) comprising n upper mold (20) which comprises a body (21) and a molding surface (22) and a lower mold (30) which comprises a body (31) and a molding surface (32); **characterized in that** the method comprises at least the steps of :
(a) pre-heating at least the molding surface (22) of the upper mold (20) to a temperature between 40°C and 90°C, and preferably between 75°C and 80°C;
(b) inserting the glazing panel (2) between the upper mold (20) and the lower mold (30);
(c) closing the mold (1) to form a cavity (50) around at least a portion of the periphery of the glazing panel (2) formed when the mold (1) is closed between molding surfaces (22, 32) and the glazing panel (2);
(d) injecting a plastic material into the cavity (50) to form a profiled joint to the glazing panel (2);
(e) cooling at least the molding surface (22) of the upper mold (20) to a temperature of the surface of the encapsulation between 30°C and 50°C and
(f) extracting the encapsulated glazing panel (2) from the mold.

2. Method according to claim 1 **characterized in that** the molding surface (22) of the upper mold (20) in contact with the plastic material is at least partially textured and **in that** the profiled joint is textured with the texture corresponding to the texture of the mold.

3. Method according to any preceding claims **characterized in that** the body (21) of the upper mold (20) comprises a heating device (60) and a cooling device (70).

4. Method according to any preceding claims **characterized in that** the body of the lower part comprises a cooling device.

5. Method according to claim 3 or 4 **characterized in that** a heating device (60) comprises ducts and inductors extending along a longitudinal direction in the ducts.

6. Glazing comprising on a portion of its periphery at least a defect-free and precisely machting profiled joint obtainable by the method of claims 1 to 5.

7. Glazing according to claim 6 **characterized in that** the at least a part of the profiled joint has a texture with a depth of at least 1 mm, preferably a with a depth of at least 5 mm and more preferably with a depth of at least mm.

8. A mold (1) to encapsulate a plastic material to at least a portion of the periphery of a glazing panel (2) comprising
- an upper mold (20) comprises a body (21) and a molding surface (22);
- a lower mold (30) comprises a body (31) a molding surface (32);
- a cavity (50) formed when the mold is closed between molding surfaces (22, 32) and the glazing panel (2);
**characterized in that** the body (21) of the upper mold (20) comprises a heating device (60) and a cooling device (70).

9. Mold according to claim 8 **characterized in that** the body of the lower part comprises a cooling device.

10. Mold according to claim 8 or 9 **characterized in that** the heating device (60) comprises ducts and inductors extending along a longitudinal direction in the ducts.

11. Mold according to claims 8 to **characterized in that** the cooling device comprises ducts in which fluid can pass through.

12. Mold according to claims 8 to 11 **characterized in that** the fluid is water.

## Patentansprüche

1. Verfahren zum Umspritzen eines Kunststoffmaterials um wenigstens einen Teil des Rands einer Glasscheibe (2) in einem Formwerkzeug (1) umfassend ein oberes Formwerkzeug (20), das einen Körper (21) und eine Formoberfläche (22) umfasst, und ein unteres Formwerkzeug (30), das einen Körper (31) und eine Formoberfläche (32) umfasst;
**dadurch gekennzeichnet, dass** das Verfahren wenigstens die Schritte umfasst:
(a) Vorheizen wenigstens der Formoberfläche (22) des oberen Formwerkzeugs (20) auf eine Temperatur von zwischen 40 °C und 90 °C und vorzugsweise zwischen 75 °C und 80 °C;
(b) Einführen der Glasplatte (2) zwischen das obere Formwerkzeug (20) und das untere Formwerkzeug (30);
(c) Schließen des Formwerkzeugs (1), um einen Hohlraum (50) um wenigstens einen Teil des Rands der Glasplatte (2) zu bilden, der, wenn das Formwerkzeug (1) geschlossen wird, zwischen Formoberflächen (22, 32) und der Glasplatte (2) gebildet wird;
(d) Einspritzen eines Kunststoffmaterials in den Hohlraum (50), um ein Dichtungsprofil mit der Glasplatte (2) zu bilden;
(e) Abkühlen wenigstens der Formoberfläche (22) des oberen Formwerkzeugs (20) auf eine Temperatur der Oberfläche der Umspritzung von zwischen 30 °C und 50 °C; und
(f) Entnehmen der umspritzten Glasplatte (2) aus dem Formwerkzeug.

2. Verfahren gemäß Anspruch 1, **dadurch gekennzeichnet, dass** die Formoberfläche (22) des oberen Formwerkzeugs (20) in Kontakt mit dem Kunststoffmaterial wenigstens teilweise texturiert ist und dass das Dichtungsprofil mit der Textur texturiert ist, die der Textur des Formwerkzeugs entspricht.

3. Verfahren gemäß einem der vorstehenden Ansprüche, **dadurch gekennzeichnet, dass** der Körper (21) des oberen Formwerkzeugs (20) eine Heizvorrichtung (60) und eine Kühlvorrichtung (70) umfasst.

4. Verfahren gemäß einem der vorstehenden Ansprüche, **dadurch gekennzeichnet, dass** der Körper des unteren Teils eine Kühlvorrichtung umfasst.

5. Verfahren gemäß Anspruch 3 oder 4, **dadurch gekennzeichnet, dass** eine Heizvorrichtung (60) Kanäle und Induktoren, die entlang einer Längsrichtung der Kanäle verlaufen, umfasst.

6. Verglasung, umfassend an einem Teil seines Rands wenigstens ein defektfreies und genau passendes Dichtungsprofil, das durch das Verfahren gemäß Ansprüchen 1 bis 5 erhältlich ist.

7. Verglasung gemäß Anspruch 6, **dadurch gekennzeichnet, dass** der wenigstens eine Teil des Dichtungsprofils eine Textur mit einer Tiefe von wenigstens 1 mm aufweist, vorzugsweise mit einer Tiefe von wenigstens 5 mm und bevorzugter mit einer Tiefe von wenigstens 10 mm.

8. Formwerkzeug (1) zum Umspritzen eines Kunststoffmaterials auf wenigstens einen Teil des Rands einer Glasscheibe (2), umfassend
- ein oberes Formwerkzeug (20), das einen Körper (21) und eine Formoberfläche (22) umfasst;
- ein unteres Formwerkzeug (30), das einen Körper (31) und eine Formoberfläche (32) umfasst;
- einen Hohlraum (50), der, wenn das Formwerkzeug geschlossen wird, zwischen Formoberflächen (22, 32) und der Glasplatte (2) gebildet wird;
**dadurch gekennzeichnet, dass** der Körper (21) des oberen Formwerkzeugs (20) eine Heizvorrichtung (60) und eine Kühlvorrichtung (70) umfasst.

9. Formwerkzeug gemäß Anspruch 8, **dadurch gekennzeichnet, dass** der Körper des unteren Teils eine Kühlvorrichtung umfasst.

10. Formwerkzeug gemäß Anspruch 8 oder 9, **dadurch gekennzeichnet, dass** die Heizvorrichtung (60) Kanäle und Induktoren, die entlang einer Längsrichtung der Kanäle verlaufen, umfasst.

11. Formwerkzeug gemäß Ansprüchen 8 bis 10, **dadurch gekennzeichnet, dass** die Kühlvorrichtung Kanäle umfasst, durch die Fluid fließen kann.

12. Formwerkzeug gemäß Ansprüchen 8 bis 11, **dadurch gekennzeichnet, dass** das Fluid Wasser ist.

## Revendications

1. Procédé permettant d'encapsuler une matière plastique dans moins une partie de la périphérie d'un panneau vitré (2) dans un moule (1) comprenant un moule supérieur (20) qui comprend un corps (21) et une surface de moulage (22) et un moule inférieur (30) qui comprend un corps (31) et une surface de moulage (32) ;
**caractérisé en ce que** le procédé comprend au moins les étapes de :
(a) préchauffage d'au moins la surface de moulage (22) du moule supérieur (20) à une température entre 40 °C et 90 °C, et de préférence entre 75 °C et 80 °C ;
(b) insertion du panneau vitré (2) entre le moule supérieur (20) et le moule inférieur (30) ;
(c) fermeture du moule (1) pour former une cavité (50) autour d'au moins une partie de la périphérie du panneau vitré (2) formé quand le moule (1) est fermé entre les surfaces de moulage (22, 32) et le panneau vitré (2) ;
(d) injection d'une matière plastique dans la cavité (50) pour former un joint profilé sur le panneau vitré (2) ;
(e) refroidissement d'au moins la surface de moulage (22) du moule supérieur (20) à une température de la surface de l'encapsulation entre 30 °C et 50 °C et
(f) extraction du panneau vitré (2) encapsulé à partir du moule.

2. Procédé selon la revendication 1 **caractérisé en ce que** la surface de moulage (22) du moule supérieur (20) en contact avec la matière plastique est au moins partiellement texturée et **en ce que** le joint profilé est texturé avec la texture correspondant à la texture du moule.

3. Procédé selon l'une quelconque des revendications précédentes **caractérisé en ce que** le corps (21) du moule supérieur (20) comprend un dispositif chauffant (60) et un dispositif de refroidissement (70).

4. Procédé selon l'une quelconque des revendications précédentes **caractérisé en ce que** le corps de la partie inférieure comprend un dispositif de refroidissement.

5. Procédé selon la revendication 3 ou 4 **caractérisé en ce qu'**un dispositif chauffant (60) comprend des conduits et des inducteurs s'étendant le long d'une direction longitudinale dans les conduits.

6. Vitrage comprenant sur une partie de sa périphérie au moins un joint profilé sans défaut et précisément adapté pouvant être obtenu par le procédé selon les revendications 1 à 5.

7. Vitrage selon la revendication 6 **caractérisé en ce que** l'au moins une partie du joint profilé a une texture ayant une profondeur d'au moins 1 mm, de préférence ayant une profondeur d'au moins 5 mm et plus préférentiellement ayant une profondeur d'au moins 10 mm.

8. Moule (1) destiné à encapsuler une matière plastique sur au moins une partie de la périphérie d'un panneau vitré (2) comprenant
- un moule supérieur (20) comprenant un corps (21) et une surface de moulage (22) ;
- un moule inférieur (30) comprenant un corps (31) et une surface de moulage (32) ;
- une cavité (50) formée quand le moule est fermé entre les surfaces de moulage (22, 32) et le panneau vitré (2) ;
**caractérisé en ce que** le corps (21) du moule supérieur (20) comprend un dispositif chauffant (60) et un dispositif de refroidissement (70).

9. Moule selon la revendication 8 **caractérisé en ce que** le corps de la partie inférieure comprend un dispositif de refroidissement.

10. Moule selon la revendication 8 ou 9 **caractérisé en ce que** le dispositif chauffant (60) comprend des conduits et des inducteurs s'étendant le long d'une direction longitudinale dans les conduits.

11. Moule selon les revendications 8 à 10 **caractérisé en ce que** le dispositif de refroidissement comprend des conduits par lesquels un fluide peut passer.

12. Moule selon les revendications 8 à 11 **caractérisé en ce que** le fluide est l'eau.
